# EUROPÄISCHE PATENTSCHRIFT

(11) **EP 0 762 996 B1**
(45) Veröffentlichungstag und Bekanntmachung des Hinweises auf die Patenterteilung: **08.04.1998**
(21) Anmeldenummer: 95921752.2
(22) Anmeldetag: 16.05.1995
(51) Int. Cl.: C03C 17/02, C03B 8/02

(54) **VERFAHREN ZUR HERSTELLUNG VON STRUKTURIERTEN ANORGANISCHEN SCHICHTEN**
METHOD OF PRODUCING STRUCTURED INORGANIC LAYERS
PROCEDE DE PRODUCTION DE COUCHES INORGANIQUES STRUCTUREES

(30) Priorität: 18.05.1994 DE 4417405
(43) Veröffentlichungstag der Anmeldung: 19.03.1997
(73) Patentinhaber: INSTITUT FÜR NEUE MATERIALIEN gemeinnützige GmbH, 66123 Saarbrücken (DE)
(72) Erfinder: SCHMIDT, Helmut, D-66130 Saarbrücken (DE); MENNIG, Martin, D-66287 Quierschied (DE); KRUG, Herbert, D-66346 Püttlingen (DE)
(74) Vertreter: Barz, Peter, Dr.
(86) Internationale Anmeldenummer: EP9501844
(87) Internationale Veröffentlichungsnummer: WO9531413

(56) Entgegenhaltungen:
- EP-A- 0 452 922
- DE-A- 4 130 550
- DE-A- 4 338 360
- US-A- 5 093 286
- US-A- 5 182 143
- OPTICS LETTERS, Bd. 8, Nr. 10, Oktober 1983 WASHINGTON US, Seiten 537-539, W. LUKOSZ & K. TIEFENTHALER 'Embossing technique for fabricating integrated optical components in hard inorganic waveguiding materials'

## Beschreibung

Die Erfindung betrifft ein Verfahren zur Herstellung von strukturierten, gegebenenfalls funktionellen anorganischen (glasartigen, glaskeramischen oder keramischen) Schichten auf Substraten.

US-A-5182143 beschreibt ein Verfahren zum Beschichten eines Substrats mit aktiven Wasserstoffatomen an der Oberfläche mit einem mehrschichtigen dünnen Film durch einmaliges Eintauchen des Substrats in eine Beschichtungslösung, die mindestens zwei verschiedene hydrolytisch kondensierbare organometallische Verbindungen, z.B. Alkoxysilane, Wasser, Lösungsmittel und eine Base enthält.

DE-A-4130550 beschreibt optische Elemente mit einer geprägten Oberflächenstruktur, bei denen die geprägte Oberfläche aus einem transparenten Kompositmaterial besteht, das in einer Polymermatrix ein dreidimensionales Gerüst aus anorganischen und organisch-modifizierten anorganischen Komponenten in Form von nanoskaligen Partikeln und/oder einem molekularen Netzwerk aufweist.

Aus Optics Letters, Vol. 81, (Oct. 1983), No. 10, S. 537-539 sind strukturierte anorganische Beschichtungen bekannt, die durch einen Sol-Gel-Prozess hergestellt werden, wobei jedoch Angaben zu dem konkret verwendeten Beschichtungsmaterial fehlen.

Kontret betrifft die Erfindung ein Verfahren zur Herstellung von strukturierten anorganischen Schichten auf Substraten, das dadurch gekennzeichnet ist, daß man ein anorganisch-organisches System, das erhältlich ist durch Hydrolyse und Polykondensation von
(A) mindestens einem hydrolysierbaren Silan der allgemeinen Formel (I)

   SiX₄ (I)

   in der die Reste X gleich oder verschieden sind und hydrolysierbare Gruppen oder Hydroxylgruppen bedeuten, oder einem davon abgeleiteten Oligomer, und
(B) mindestens einem Organosilan der allgemeinen Formel (II)

   R¹ ₐR² _{b}SiX_{(4-a-b)} (II)

   in der R¹ ein nicht hydrolysierbarer Rest ist, R² einen eine funktionelle Gruppe tragenden SiC-gebundenen Rest bedeutet, X die vorstehende Bedeutung hat und a und b den Wert 0, 1, 2 oder 3 haben, wobei die Summe (a+b) den Wert 1, 2 oder 3 hat, oder einem davon abgeleiteten Oligomer
   in einem Stoffmengenverhältnis (A):(B) von 5-50 : 50-95, sowie
(C) gegebenenfalls einer oder mehreren Verbindungen von glas- bzw. keramikbildenden Elementen,
gegebenenfalls mit einem feinskaligen Füllstoff mischt, die erhaltene Zusammensetzung als Schicht auf ein Substrat aufbringt, das aufgetragene System strukturiert und die strukturierte Beschichtung thermisch zu einer strukturierten Schicht verdichtet, wobei das Profil der Struktur nicht verändert wird.

Das erfindungsgemäße Verfahren beruht auf der überraschenden Erkenntnis, daß die auf das Substrat aufgebrachte strukturierte Beschichtung trotz ihres relativ hohen Anteils an organischen (Kohlenstoff-haltigen) Komponenten einer thermischen Verdichtung bei hohen Temperaturen unterzogen werden kann, ohne daß das Profil der Struktur verändert wird. Bei der thermischen Verdichtung findet ein stetiger Übergang von einem organisch-modifizierten Glas (bzw. Keramik) bis hin zu einem rein anorganischen (Kohlenstoff-freien) SiO₂-Glas (bzw. Keramik) statt.

Es ist bereits bekannt, daß bestimmte organisch modifizierte anorganische Sol-Gel-Beschichtungen durch eine geeignete thermische Behandlung in anorganische Systeme überführt werden können, ohne die Schichten dabei zu beeinträchtigen. Weiter ist es auch bekannt, daß anorganische Sol-Gel-Beschichtungen prinzipiell durch Prägeverfahren strukturiert und durch thermische Verdichtung bei Temperaturen von 500 bis 700°C in anorganische glasartige Schichten überführt werden können. Dabei können jedoch Strukturhöhen von wenigen 100 nm nicht überschritten werden und aufgrund der extrem hohen Schrumpfung (30 bis 70 Vol.-%) ist ein "near net shaping" ausgeschlossen. Es ist deshalb überraschend, daß die erfindungsgemäß verwendeten Beschichtungssysteme beim thermischen Verdichten ein im Gelzustand erzeugtes Profil beibehalten. Insbesondere tritt keine Verrundung strukturierter Kanten auf, wie dies für andere Strukturierungsverfahren für anorganische Materialien (z.B. Siebdruck mit keramischen Farben, Heißpressen von Silikat-Gläsern oder Formgebungsverfahren mit Glaspulvern) allgemein bekannt ist. Erfindungsgemäß sind Schichtdicken von bis zu etwa 10 µm problemlos realisierbar und Strukturhöhen in der gleichen Größenordnung können z.B. durch Prägprozesse in das Material übertragen werden, ohne daß bei der Überführung in die (rein) anorganische Form durch thermische Behandlung eine Veränderung des Strukturprofils festzustellen wäre.

Bei den hydrolysierbaren Silanen (A) und den Organosilanen (B) sind die hydrolysierbaren Gruppen X beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen.

Der nicht hydrolysierbare Rest R¹ ist beispielsweise Alkyl (vorzugsweise C₁₋₆-Alkyl, wie Methyl, Ethyl, n-Propyl, Isopropyl, n-Butyl, s-Butyl und t-Butyl, Pentyl, Hexyl oder Cyclohexyl), Alkenyl (vorzugsweise C₂₋₆-Alkenyl, wie z.B. Vinyl, 1-Propenyl, 2-Propenyl und Butenyl), Alkinyl (vorzugsweise C₂₋₆-Alkinyl, wie z.B. Acetylenyl und Propargyl) und Aryl (vorzugsweise C₆₋₁₀-Aryl, wie z.B. Phenyl und Naphthyl). Die genannten Reste R¹ und X können gegebenenfalls einen oder mehrere übliche Substituenten, wie z.B. Halogen oder Alkoxy, aufweisen.

Spezielle Beispiele für die funktionellen Gruppen des SiC-gebundenen Restes R² sind die Epoxy-, Hydroxy-, Ether-, Amino-, Monoalkylamino-, Dialkylamino-, Amid-, Carboxy-, Mercapto-, Thioether-, Vinyl-, Acryloxy-, Methacryloxy-, Cyano-, Halogen-, Aldehyd-, Alkylcarbonyl-, Sulfonsäure- und Phosphorsäuregruppe. Diese funktionellen Gruppen sind über Alkylen-, Alkenylen- oder Arylen-Brückengruppen, die durch Sauerstoff- oder Schwefelatome oder -NH-Gruppen unterbrochen sein können, an das Siliciumatom gebunden. Die genannten Brückengruppen leiten sich z.B. von den oben genannten Alkyl-, Alkenyl- oder Arylresten ab. Die Reste R² enthalten vorzugsweise 1 bis 18, insbesondere 1 bis 8 Kohlenstoffatome.

In der allgemeinen Formel (II) hat a vorzugsweise den Wert 0, 1 oder 2, b vorzugsweise den Wert 1 oder 2 und die Summe (a+b) vorzugsweise den Wert 1 oder 2.
Besonders bevorzugte hydrolysierbare Silane (A) sind Tetraalkoxysilane wie Tetraethoxysilan (TEOS). Besonders bevorzugte Organosilane sind Epoxysilane wie 3-Glycidyloxypropyl-trimethoxysilan (GPTS) und Aminosilane wie 3-Aminopropyl-triethoxysilan und 3-(Aminoethylamino)-propyl-triethoxysilan (DIAMO).

Das Stoffmengenverhältnis des hydrolysierbaren Silans (A) zu dem Organosilan (B) beträgt 5 bis 50 : 50 bis 95, vorzugsweise 15 bis 25 : 75 bis 85.

Die Eventualkomponente (C) ist vorzugsweise im Reaktionsmedium löslich oder dispergierbar. Verwendbar sind z.B. Verbindungen (Halogenide, Alkoxide, Carboxylate, Chelate, etc.) von Lithium, Natrium, Kalium, Rubidium, Cäsium, Beryllium, Magnesium, Calcium, Strontium, Barium, Bor, Aluminium, Titan, Zirkon, Zinn, Zink oder Vanadium. Die Hydrolyse und Polykondensation wird entweder in Abwesenheit eines Lösungsmittels oder vorzugsweise in einem wäßrigen oder wäßrig/organischen Reaktionsmedium, gegebenenfalls in Gegenwart eines sauren oder basischen Kondensationskatalysators wie HCl, HNO₃ oder NH₃ durchgeführt. Bei Einsatz eines flüssigen Reaktionsmediums sind die Ausgangskomponenten in dem Reaktionsmedium löslich. Als organische Lösungsmittel eignen sich insbesondere mit Wasser mischbare Lösungsmittel, z.B. ein- oder mehrwertige aliphatische Alkohole, Ether, Ester, Ketone, Amide, Sulfoxide und Sulfone.

Vorzugsweise erfolgt die Hydrolyse und Polykondensation unter den Bedingungen des Sol-Gel-Prozesses, wobei das Reaktionsgemisch im viskosen Sol-Zustand zum Beschichten des Substrats verwendet wird.

Gegebenenfalls wird die Hydrolyse und Polykondensation in Gegenwart eines Komplexbildners durchgeführt, z.B. Nitraten, β-Dicarbonylverbindungen (z.B. Acetylacetonaten oder Acetessigsäurester), Carbonsäuren (z.B. Methacrylsäure) oder Carboxylaten (z.B. Acetat, Citrat oder Glykolat), Betainen, Diolen, Diaminen (z.B. DIAMO) oder Kronenethern.

Der gegebenenfalls (und vorzugsweise) zugesetzte feinskalige Füllstoff kann dem Reaktionssystem vor, während oder nach der soeben beschriebenen Hydrolyse und Kondensation zugegeben werden. Vorzugsweise erfolgt die Zugabe zu Beginn der Solbildung, gegebenenfalls nach geeigneter Vorhydrolyse der beteiligten Silane.

Der feinskalige Füllstoff wird vorzugsweise in einer Menge von 0 bis 50 Gew.-%, vorzugsweise 10 bis 40 Gew.-% und insbesondere 20 bis 30 Gew.-%, bezogen auf den Feststoffanteil der aufgetragenen Zusammensetzung, eingesetzt. Die Zugabe kann z.B. in Form wäßriger oder alkoholischer Suspensionen von nanoskaligen Partikeln (Größenbereich 1 bis 1000 nm, vorzugsweise 1 bis 300 nm) mit geeigneter Teilchengrößenverteilung erfolgen.

Bevorzugte Füllstoffe sind Oxide von Metallen und Nichtmetallen (z.B. SiO₂, TiO₂, ZrO₂, Al₂O₃ und Fe₂O₃, aber auch Metalloxide wie Cr₂O₃, CuO, Cu₂O, ZnO, Mn₂O₃, SnO₂, PdO und In₂O₃), einschließlich der Mischoxide (z.B. Spinelle) und ähnliche sauerstoffhaltige (z.B. hydratisierte) Verbindungen (beispielsweise, AlOOH) sowie Ruß.

Der Füllstoff kann mehrere Funktionen erfüllen, beispielsweise Steuerung der Rheologie der Beschichtungszusammensetzung sowohl beim Auftragen als auch beim Strukturieren, Beeinflussung des Verdichtungs- und Schrumpfungsverhaltens des Materials bei der Überführung der strukturierten Beschichtung in ein anorganisches System und Erzielung besonderer Eigenschaften, insbesondere optischer Eigenschaften (z.B. durch Extinktionseffekte). Gegebenenfalls kann das erhaltene Sol auch mit mindestens einem molekulardispersen oder nanoskaligen Funktionsträger aus der Gruppe der temperaturbeständigen Farbstoffe und Pigmente, färbenden Metallionen, Metall- oder Metallverbindungs-Kolloide und Metallionen, die unter Reduktionsbedingungen zu Metall-Kolloiden reagieren, vermischt werden.

Als temperaturbeständige Farbstoffe eignen sich z.B. Azofarbstoffe wie Methylorange, Alizaringelb oder Kongorot; Dispersionsfarbstoffe wie Disperse Red; Triphenylmethanfarbstoffe wie Malachitgrün, Eosin, Fluoreszein, Aurin und Phenolphthalein; Küpenfarbstoffe wie Indigo, Thioindigo und Anthrachinon-Farbstoffe; Perylenfarbstoffe sowie Fluoreszenzfarbstoffe wie Fluorescent Brightener 28. Verwendbare Pigmente sind z.B. Phthalocyanine mit z.B. Cu, Co, Ni, Zn oder Cr als Zentralatom und Rußpigmente mit einem Partikeldurchmesser unter 500 nm.

Die färbenden Metallionen werden vorzugsweise in Form von wasserlöslichen Salzen, z.B. Nitraten oder Halogeniden, von z.B. Mn²+, Co²⁺, Fe³⁺ oder Cr³⁺ eingesetzt.

Als Metallkolloide eignen sich insbesondere solche von Ag, Cu, Au, Pd und Pt. Diese haben gewöhnlich einen Partikeldurchmesser von 1 bis 100 nm, das heißt 1 bis 20 nm im Falle von transparenten Schichten bzw. 20 bis 100 nm im Falle von lichtstreuenden Schichten.

Geeignete Metallverbindungen in kolloidaler Form sind z.B. Metallhalogenide wie AgCl, AgBr, AgClₓBr₁₋ₓ und CuCl, Metallcarbide wie TiC und B₄C, Metallnitride wie BN und TiN, Metallarsenide wie Cd₃As₂, Metallphosphide wie Cd₃P₂, Chalkogenide (Sulfide, Selenide, Telluride) wie AgS, CdS, HgS, PbS und ZnS; CdSe, ZnSe, CdTe; und Mischphasen wie ZnSe/PbS₂ und CdS/PbS₂.
Die Metallverbindungen haben einen Partikeldurchmesser von vorzugsweise 1 bis 100 nm, insbesondere 1 bis 50 nm und besonders bevorzugt 2 bis 30 nm.

Die Menge des Funktionsträgers richtet sich nach den gewünschten funktionellen Eigenschaften der Beschichtung, z.B. der gewünschten Farbintensität oder Opazität.

Das Metall- oder Metallverbindungskolloid kann gegebenenfalls in vorkomplexierter Form eingesetzt werden, wobei z.B. die oben genannten Komplexbildner Anwendung finden.

Das gegebenenfalls mit dem feinskaligen Füllstoff und/oder dem Funktionsträger vermischte Sol wird, nachdem gegebenenfalls noch die Viskosität durch Entfernen oder Zugabe eines Lösungsmittels eingestellt worden ist, nach üblichen Beschichtungsmethoden auf das Substrat aufgebracht. Anwendbare Techniken sind z,.B. Tauchen, Rakeln, Gießen, Schleudern, Aufsprühen, Aufstreichen, Walzenauftrag und flächiger Siebdruck. Die Trockendicke der aufgetragenen Beschichtung liegt im allgemeinen im Bereich von 0,1 bis 10 µm, vorzugsweise 0,7 bis 8 µm und insbesondere 1 bis 5 µm.

Geeignete Substrate sind z.B. solche aus Metallen wie Edelstahl, Kupfer, Messing und Aluminium; Gläsern wie Floatglas, Borsilikatglas, Bleikristall- oder Kieselglas; und Keramiken wie Al₂O₃, ZrO₂, SiO₂-Mischoxiden oder auch Email.

Die aufgetragene Zusammensetzung wird anschließend strukturiert. Die Strukturierung erfolgt zweckmäßigerweise im Gelzustand der Beschichtung zu einem Zeitpunkt, zu dem die Gelschicht weitgehend lösungsmittelfrei, jedoch noch viskos bzw. plastisch deformierbar ist. Während der Strukturierung erfolgt eine weitere Vernetzung und damit Stabilisierung des Gels. Dieser Schritt bedarf im allgemeinen keiner thermischen Aktivierung. Deshalb ist es z.B. möglich, Prägewerkzeuge aus organischen Polymeren einzusetzen. Die Strukturierung kann durch gängige (mechanische) Verfahren erfolgen, z.B. durch Prägen mit einer geeigneten Vorlage (Prägestempel, Walze usw.) oder mit Hilfe geeigneter Drucktechniken (z.B. Tampondruck).

Nach erfolgter Strukturierung wird die Beschichtung einer thermischen Nachbehandlung (Verdichtung) unterzogen. Diese Nachbehandlung erfolgt (nach dem Entformen) vorzugsweise bei Temperaturen von über 250°C, vorzugsweise über 400°C und besonders bevorzugt über 500°C. Im allgemeinen erfolgt die thermische Verdichtung im Bereich von 400 bis 700°C. Die maximal einsetzbare Temperatur richtet sich selbstverständlich auch nach dem Schmelz- bzw. Erweichungspunkt des Substratmaterials.

Die thermische Verdichtung kann an der Luft oder in einem Inertgas wie Stickstoff oder Argon durchgeführt werden. Die Wärmebehandlung kann gegebenenfalls auch durch IR- oder Laser-Strahlung erfolgen. Gegebenenfalls kann ein Trocknungsschritt bei Temperaturen von z.B. 80 bis 150°C vorgeschaltet werden.

Die folgenden Beispiele erläutern die Erfindung.

### Beispiel 1

### Herstellung einer mit einem Rechteckgitter strukturierten SiO₂-Schicht auf Glas

Unter ständigem Rühren werden zu einer Mischung von 160 ml Methyltriethoxysilan und 48 ml Tetraethoxysilan 57 ml Bayer-Kieselsol 300 (30%, Na-stabilisiert) und 1,4 ml konzentrierte Salzsäure gegeben. Nach etwa 5 Minuten Reaktionszeit wird das enstandene Sol in einem Eisbad gekühlt und anschließend durch einen Filter (0,2 µm Porenweite) filtriert.

Die Beschichtung des Glassubstrats erfolgt bei Raumtemperatur im Tauchbeschichtungsverfahren mit einer Ziehgeschwindigkeit von 4 mm/Sek., wodurch ein Gelfilm von etwa 3 µm Dicke entsteht. Nach etwa 2-minütigem Trocknen des Gelfilms bei Raumtemperatur erfolgt das Prägen mit einem Rechteckgitterstempel (Ni Shim, Periode 1,4 µm, Tiefe 1,5 µm) bei einem Anpreßdruck von ca. 0,3 MPa für etwa 10 Minuten bei Raumtemperatur. Die Entformung wird ebenfalls bei Raumtemperatur vorgenommen, worauf die strukturierte Beschichtung 1 Stunde bei 80°C getrocknet und anschließend thermisch in Luft verdichtet wird. Bis zu einer Temperatur von 300°C wird mit einer Rate von 1 K/Min. aufgeheizt, anschließend wird die Temperatur mit 0,3 K/Min. bis auf 500°C angehoben und 1 Stunde bei diesem Wert gehalten. Abschließend wird mit etwa 1 K/Min. auf Raumtemperatur abgekühlt. Erhalten wird eine glasartige transparente Rechteckgitterstruktur aus SiO₂ mit einer Periode von 1,4 µm und einer Höhe von etwa 1,2 µm.

### Beispiel 2

### Herstellung einer Rillenstruktur mit einem Kunststoffstempel

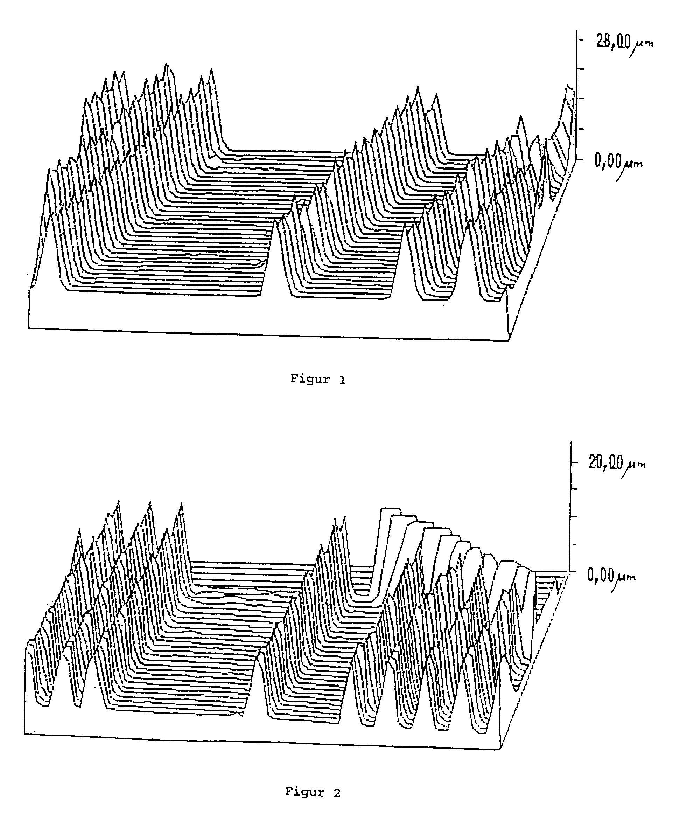

Die Beschichtungslösung wird analog zu Beispiel 1 hergestellt. Ein Flachglassubstrat wird durch Tauchbeschichtung mit einer Ziehgeschwindigkeit von 10 mm/Sek. beschichtet, wodurch ein Gelfilm von etwa 10 µm Dicke entsteht. Nach 2-minütigem Trocknen der Beschichtung bei Raumtemperatur wird ein Stempel mit Rillenstruktur (Rillentiefe 10 bis 12 µm) aus Kunststoff mit einem Anpreßdruck von etwa 0,2 MPa 10 Minuten lang bei Raumtemperatur in die Beschichtung gedrückt, worauf bei Raumtemperatur entformt wird. Eine Oberflächenbehandlung des Stempels ist nicht erforderlich, die Reinigung ist mit alkoholischen Lösungsmitteln möglich. Die thermische Verdichtung erfolgt wie in Beispiel 1. Erhalten wird die in Figur 1 (nach Trocknen bei 80°C) bzw. Figur 2 (nach Verdichten bei 500°C) gezeigte Stegstruktur als rißfreie und optisch transparente, glasartige Beschichtung. Die lineare Schrumpfung beträgt etwa 10 bis 20% und die Strukturhöhe nach der thermischen Verdichtung beträgt etwa 8 µm. Das Aspektverhältnis der Stege bleibt vollständig erhalten. Diese profilometrische Darstellung belegt den überraschenden Befund, daß bei der Überführung des aufgetragenen Materials in ein anorganisches Glas die Kanten nicht verrunden, wie man es bei allen anderen Strukturierungstechniken für Glas erwarten würde.

## Patentansprüche

1. Verfahren zur Herstellung von strukturierten anorganischen Schichten auf Substraten, dadurch gekennzeichnet, daß man eine Zusammensetzung, die erhältlich ist durch Hydrolyse und Polykondensation von
(A) mindestens einem hydrolysierbaren Silan der allgemeinen Formel (I)
SiX₄ (I)
in der die Reste X gleich oder verschieden sind und hydrolysierbare Gruppen oder Hydroxylgruppen bedeuten, oder einem davon abgeleiteten Oligomer, und
(B) mindestens einem Organosilan der allgemeinen Formel (II)
R¹ ₐR² _{b}SiX_{(4-a-b)} (II)
in der R¹ eine nicht hydrolysierbare Gruppe ist, R² einen eine funktionelle Gruppe tragenden SiC-gebundenen Rest bedeutet, X die vorstehende Bedeutung hat und a und b den Wert 0, 1, 2 oder 3 haben, wobei die Summe (a+b) den Wert 1, 2 oder 3 hat, oder einem davon abgeleiteten Oligomer
in einem Stoffmengenverhältnis (A):(B) von 5-50 : 50-95, sowie
(C) gegebenenfalls einer oder mehreren Verbindungen von glas- bzw. keramikbildenden Elementen,
gegebenenfalls mit einem feinskaligen Füllstoff mischt, die erhaltene Zusammensetzung auf ein Substrat aufbringt, die aufgetragene Zusammensetzung strukturiert und die strukturierte Beschichtung thermisch zu einer strukturierten Schicht verdichtet.

2. Verfahren nach Anspruch 1, dadurch gekennzeichnet, daß man als hydrolysierbare Silane (A) Tetraalkoxysilane verwendet.

3. Verfahren nach irgendeinem der Ansprüche 1 und 2, dadurch gekennzeichnet, daß man als Organosilane (B) Epoxysilane oder Aminosilane verwendet.

4. Verfahren nach irgendeinem der Ansprüche 1 bis 3, dadurch gekennzeichnet, daß man die Hydrolyse und Polykondensation unter den Bedingungen des Sol-Gel-Prozesses durchführt.

5. Verfahren nach irgendeinem der Ansprüche 1 bis 4, dadurch gekennzeichnet, daß man die Hydrolyse und Polykondensation in Gegenwart eines Komplexbildners durchführt.

6. Verfahren nach irgendeinem der Ansprüche 1 bis 5, dadurch gekennzeichnet, daß der Füllstoff in einer Menge von 0 bis 50 Gew.-%, vorzugsweise 20 bis 30 Gew.-%, bezogen auf den Feststoffanteil der aufgetragenen Zusammensetzung, eingesetzt wird.

7. Verfahren nach irgendeinem der Ansprüche 1 bis 6, dadurch gekennzeichnet, daß die Teilchengröße des Füllstoffes im Bereich von 1 bis 1000 nm, vorzugsweise 1 bis 300 nm, liegt.

8. Verfahren nach irgendeinem der Ansprüche 1 bis 7, dadurch gekennzeichnet, daß der Füllstoff ausgewählt wird aus (Misch-)Oxiden von Metallen und Nichtmetallen sowie anderen sauerstoffhaltigen Verbindungen von Metallen und Nichtmetallen, Ruß und Mischungen derselben.

9. Verfahren nach irgendeinem der Ansprüche 1 bis 8, dadurch gekennzeichnet, daß der Füllstoff ausgewählt wird aus SiO₂, TiO₂, ZrO₂, Al₂O₃, Fe₂O₃, Spinellen, AlOOH, Ruß und Mischungen derselben.

10. Verfahren nach irgendeinem der Ansprüche 1 bis 9, dadurch gekennzeichnet, daß der Zusammensetzung mindestens ein Funktionsträger aus der Gruppe der temperaturbeständigen Farbstoffe oder Pigmente, färbenden Metallionen, Metall- oder Metallverbindungs-Kolloide und Metallionen, die unter Reduktionsbedingungen zu Metall-Kolloiden reagieren, einverleibt wird.

11. Verfahren nach Anspruch 10, dadurch gekennzeichnet, daß man als Funktionsträger einen temperaturbeständigen Farbstoff aus der Gruppe der Azofarbstoffe, Dispersionsfarbstoffe, Perylenfarbstoffe, Triphenylmethanfarbstoffe, Küpenfarbstoffe und Fluoreszenzfarbstoffe; oder ein Pigment aus der Gruppe der Phthalocyanin- oder Rußpigmente verwendet.

12. Verfahren nach irgendeinem der Ansprüche 10 und 11, dadurch gekennzeichnet, daß man als Funktionsträger färbende Metallionen in der Form von wasserlöslichen Metallsalzen verwendet.

13. Verfahren nach irgendeinem der Ansprüche 10 bis 12, dadurch gekennzeichnet, daß man als Funktionsträger Nanopartikel mit einem Teilchendurchmesser von 1 bis 100 nm verwendet.

14. Verfahren nach Anspruch 10, dadurch gekennzeichnet, daß man als Funktionsträger Kolloide von Metallen, Metallhalogeniden, Metallcarbiden, Metallnitriden, Metallarseniden, Metallphosphiden oder Metallchalkogeniden verwendet.

15. Verfahren nach irgendeinem der Ansprüche 1 bis 14, dadurch gekennzeichnet, daß das Substrat aus Metall, Glas oder Keramik ausgewählt wird.

16. Verfahren nach irgendeinem der Ansprüche 1 bis 15, dadurch gekennzeichnet, daß die Zusammensetzung in einer Trockendicke von 0,1 bis 10 µm, insbesondere 1 bis 8 µm, aufgetragen wird.

17. Verfahren nach irgendeinem der Ansprüche 1 bis 16, dadurch gekennzeichnet, daß die Strukturierung der aufgetragenen Zusammensetzung mit einem Prägestempel oder einer Walze oder durch Tampondruck erfolgt.

18. Verfahren nach irgendeinem der Ansprüche 1 bis 17, dadurch gekennzeichnet, daß man die strukturierte Beschichtung, gegebenenfalls nach vorherigem Trocknen, bei Temperaturen über 250°C, vorzugsweise über 400°C, thermisch verdichtet.

## Claims

1. Process for the production of structured inorganic layers on substrates, characterized in that a composition which is obtainable by hydrolysis and polycondensation of
(A) at least one hydrolyzable silane of general formula (I)
SiX₄ (I)
wherein the radicals X are identical or different and represent hydrolyzable groups or hydroxyl groups, or an oligomer derived therefrom, and
(B) at least one organosilane of general formula (II)
R¹ ₐR² _{b}SiX_{(4-a-b)} (II)
wherein R¹ is a non-hydrolyzable group, R² represents an Si-C-bonded radical carrying a functional group, X has the meaning specified above, and a and b are 0, 1, 2 or 3, the sum (a+b) being 1, 2 or 3, or an oligomer derived therefrom,
in a molar ratio of (A):(B) of 5-50:50-95, as well as
(C) optionally, one or more compounds of glass- or ceramic-forming elements,
is optionally mixed with a fine-scaled filler, the resulting composition is applied onto a substrate, the applied composition is structured and the structured coating is thermally densified to form a structured layer.

2. Process according to claim 1, characterized in that tetraalkoxysilanes are used as hydrolyzable silanes (A).

3. Process according to any one of claims 1 and 2, characterized in that epoxysilanes or aminosilanes are used as organosilanes (B).

4. Process according to any one of claims 1 to 3, characterized in that said hydrolysis and polycondensation are carried out under the conditions of the solgel process.

5. Process according to any one of claims 1 to 4, characterized in that said hydrolysis and polycondensation are carried out in the presence of a complexing agent.

6. Process according to any one of claims 1 to 5, characterized in that said filler is used in an amount of 0 to 50 percent by weight, preferably 20 to 30 percent by weight, based on the solids content of the applied composition.

7. Process according to any one of claims 1 to 6, characterized in that the particle size of said filler ranges from 1 to 1000 nm, preferably from 1 to 300 nm.

8. Process according to any one of claims 1 to 7, characterized in that said filler is selected from (mixed) oxides of metals and non-metals as well as other oxygen-containing compounds of metals and non-metals, carbon black and mixtures thereof.

9. Process according to any one of claims 1 to 8, characterized in that said filler is selected from SiO₂, TiO₂, ZrO₂, Al₂O₃, Fe₂O₃, spinels, AIOOH, carbon black and mixtures thereof.

10. Process according to any one of claims 1 to 9, characterized in that at least one function carrier from the group of temperature resistant dyes or pigments, coloring metal ions, metal or metal compound colloids and metal ions which form metal colloids under reducing conditions is incorporated into the composition.

11. Process according to claim 10, characterized in that a temperature resistant dye from the group of the azo dyes, disperse dyes, perylene dyes, triphenylmethane dyes, vat dyes and fluorescent dyes; or a pigment from the group of the phthalocyanine or carbon black pigments is used as function carrier.

12. Process according to any one of claims 10 and 11, characterized in that coloring metal ions in the form of water-soluble metal salts are used as function carrier.

13. Process according to any one of claims 10 to 12, characterized in that nano-particles having a particle diameter of 1 to 100 nm are used as function carrier.

14. Process according to claim 10, characterized in that colloids of metals, metal halides, metal carbides, metal nitrides, metal arsenides, metal phosphides or metal chalkogenides are used as function carrier.

15. Process according to any one of claims 1 to 14, characterized in that the substrate is selected from metal, glass or ceramic.

16. Process according to any one of claims 1 to 15, characterized in that the composition is applied in a dry thickness of from 0.1 to 10 µm, particularly from 1 to 8 µm.

17. Process according to any one of claims 1 to 16, characterized in that the applied coating is structured by means of an embossing die or a roll or by means of tampon printing.

18. Process according to any one of claims 1 to 17, characterized in that the structured coating is thermally densified, optionally after a preceding drying operation, at temperatures in excess of 250°C, preferably in excess of 400°C.

## Revendications

1. Procédé de fabrication de couches inorganiques structurées sur des substrats, caractérisé en ce qu'on mélange une composition qu'on peut obtenir par hydrolyse et polycondensation de :
(A) au moins un silane hydrolysable répondant à la formule générale (I)
SiX₄ (I)
dans laquelle les restes X sont identiques ou différents et signifient des groupes hydrolysables ou des groupes hydroxyles, ou un oligomère obtenu à partir de celui-ci, et
(B) au moins un organosilane répondant à la formule générale (II)
R¹ ₐR² _{b}SiX_{(4-a-b)} (II)
dans laquelle R¹ est un groupe non hydrolysable, R² signifie un reste lié à SiC et portant un groupe fonctionnel, X a la signification précédente, et a et b valent 0, 1, 2 ou 3, la somme de (a+b) valant 1, 2 ou 3, ou un oligomère obtenu à partir de celui-ci,
dans des proportions des substances (A):(B) de 5-50 : 50-95, ainsi que
(C) éventuellement un ou plusieurs composés d'éléments formant un verre ou une céramique,
éventuellement avec une charge à particules fines, on applique la composition obtenue sur un substrat, on structure la composition appliquée et on comprime le revêtement structuré en une couche structurée par voie thermique.

2. Procédé selon la revendication 1, caractérisé en ce qu'on utilise des tétra-alcoxysilanes comme silanes hydrolysables (A).

3. Procédé selon l'une quelconque des revendications 1 et 2, caractérisé en ce qu'on utilise des époxysilanes ou des aminosilanes comme organosilanes (B).

4. Procédé selon l'une quelconque des revendications 1 à 3, caractérisé en ce qu'on effectue l'hydrolyse et la polycondensation dans les conditions du procédé sol-gel.

5. Procédé selon l'une quelconque des revendications 1 à 4, caractérisé en ce qu'on effectue l'hydrolyse et la polycondensation en présence d'un agent complexant.

6. Procédé selon l'une quelconque des revendications 1 à 5, caractérisé en ce qu'on utilise la charge en une quantité de 0 à 50 % en poids, de préférence de 20 à 30 % en poids, par rapport à la proportion de matières solides de la composition appliquée.

7. Procédé selon l'une quelconque des revendications 1 à 6, caractérisé en ce que la dimension des particules de la charge est comprise entre 1 et 1 000 nm, de préférence entre 1 et 300 nm.

8. Procédé selon l'une quelconque des revendications 1 à 7, caractérisé en ce qu'on choisit la charge parmi des oxydes (mixtes) de métaux et de non-métaux, ainsi que parmi d'autres composés oxygénés de métaux et de non-métaux, le noir de fumée et des mélanges de ceux-ci.

9. Procédé selon l'une quelconque des revendications 1 à 8, caractérisé en ce qu'on choisit la charge parmi SiO₂, TiO₂, ZrO₂, Al₂O₃, Fe₂O₃, les spinelles, AlOOH, le noir de fumée et des mélanges de ceux-ci.

10. Procédé selon l'une quelconque des revendications 1 à 9, caractérisé en ce que la composition englobe au moins un support fonctionnel choisi dans l'ensemble constitué par des colorants ou des pigments résistant aux températures, des ions métalliques colorants, des colloïdes de métaux ou de composés métalliques et des ions métalliques qui donnent des colloïdes de métaux par réaction dans des conditions de réduction.

11. Procédé selon la revendication 10, caractérisé en ce qu'on utilise, comme support fonctionnel, un colorant résistant aux températures choisi dans l'ensemble constitué par les colorants azoïques, les colorants de dispersion, les colorants du type pérylène, les colorants du type triphénylméthane, les colorants de cuve et les colorants fluorescents ; ou un pigment choisi dans l'ensemble constitué par les pigments phtalocyanines ou les pigments du type noir de fumée.

12. Procédé selon l'une quelconque des revendications 10 et 11, caractérisé en ce qu'on utilise, comme support fonctionnel, des ions métalliques colorants sous la forme de sels métalliques solubles dans l'eau.

13. Procédé selon l'une quelconque des revendications 10 à 12, caractérisé en ce qu'on utilise, -comme support fonctionnel, des nanoparticules ayant un diamètre de 1 à 100 nm.

14. Procédé selon la revendication 10, caractérisé en ce qu'on utilise, comme support fonctionnel, des colloïdes de métaux, d'halogénures de métaux, de carbures de métaux, de nitrures de métaux, d'arséniures de métaux, de phosphures de métaux ou de chalcogénures de métaux.

15. Procédé selon l'une quelconque des revendications 1 à 14, caractérisé en ce qu'on choisit le substrat parmi les métaux, le verre ou les céramiques.

16. Procédé selon l'une quelconque des revendications 1 à 15, caractérisé en ce qu'on applique la composition à raison d'une épaisseur à sec de 0,1 à 10 µm, en particulier de 1 à 8 µm.

17. Procédé selon l'une quelconque des revendications 1 à 16, caractérisé en ce qu'on effectue la structuration de la composition appliquée avec un poinçon de matriçage ou avec un cylindre ou sous l'effet de la pression d'un tampon.

18. Procédé selon l'une quelconque des revendications 1 à 17, caractérisé en ce qu'on comprime le revêtement structuré, éventuellement après un séchage préalable, par voie thermique à des températures supérieures à 250°C, de préférence supérieures à 400°C.
